# EUROPÄISCHE PATENTSCHRIFT

(11) **EP 3 452 202 B1**
(45) Veröffentlichungstag und Bekanntmachung des Hinweises auf die Patenterteilung: **09.12.2020**
(21) Anmeldenummer: 17709080.0
(22) Anmeldetag: 07.03.2017
(51) Int. Cl.: B01D 46/24

(54) **HOHLFILTERELEMENT, INSBESONDERE ZUR GASFILTRATION**
HOLLOW FILTER ELEMENT, IN PARTICULAR FOR GAS FILTRATION
ÉLÉMENT FILTRANT CREUX, EN PARTICULIER POUR LA FILTRATION DE GAZ

(30) Priorität: 03.05.2016 DE 102016005353
(43) Veröffentlichungstag der Anmeldung: 13.03.2019
(73) Patentinhaber: Mann+Hummel GmbH, 71636 Ludwigsburg (DE)
(72) Erfinder: DONAUER, Nadine, 70736 Fellbach (DE); PEREIRA MADEIRA, Pedro Miguel, 74321 Bietigheim-Bissingen (DE); WITTMERS,Christoph, 74321 Bietigheim-Bissingen (DE); FRANZ, Andreas, 71638 Ludwigsburg (DE); FRITZSCHING, Torsten, 71665 Vaihingen (DE); KRIEGER, Joachim-Paul, 94419 Reisbach (DE); HOLZWARTH, Marcel, Fayetteville, NC (US); GRUBER, Martin, 84140 Gangkofen (DE); WINTER, Manfred, 74906 Bad Rappenau (DE)
(74) Vertreter: Seyboth, Matthias
(86) Internationale Anmeldenummer: PCT/EP2017/055294
(87) Internationale Veröffentlichungsnummer: WO 2017/190873

(56) Entgegenhaltungen:
- WO-A1-2004/039476
- WO-A1-2016/082853
- DE-U1-202004 020 174
- US-A1- 2004 035 094

## Beschreibung

### Technisches Gebiet

Die Erfindung bezieht sich auf ein Hohlfilterelement bzw. ringförmig geschlossenes Filterelementnach dem Oberbegriff des Anspruches 1.

### Stand der Technik

Aus der WO 2014/202358 A1 ist ein Hohlfilterelement mit länglich-ovaler Querschnittsform bekannt, dessen Filtermediumkörper einen innenliegenden Strömungsraum umschließt. Das Hohlfilterelement ist in ein aufnehmendes Filtergehäuse eingesetzt und wird radial von außen nach innen von der zu reinigenden Luft durchströmt. An einer axialen Stirnseite des Hohlfilterelements befindet sich eine geschlossene Endscheibe, das gereinigte Fluid wird aus dem innenliegenden Strömungsraum über die gegenüberliegende Stirnseite axial abgeleitet.

Das Hohlfilterelement wird auf einer Längsseite liegend in das aufnehmende Filtergehäuse eingesetzt. Der Filtermediumkörper des Hohlfilterelements ist konisch zulaufend ausgebildet, so dass sich die Querschnittsfläche über die axiale Länge des Hohlfilterelements verjüngt. Am Gehäusedeckel, der auf das Filtergehäuse aufgesetzt wird, ist ein innenliegendes Schwert angeformt, das beim Aufsetzen des Gehäusedeckels ein noppenförmiges Positionierungselement an der Stirnseite des Hohlfilterelements untergreift und das Hohlfilterelement an dieser Stirnseite anhebt. Das Positionierungselement ragt radial über die Außenkontur des Filtermediumkörpers hinaus.

Aus WO 2004/039476 A1 ist ein Hohlfilterelement eines Luftfilters bekannt, das eine konische Form aufweist. An einer geschlossenen Endscheibe des Hohlfilterelements liegt eine Positionierungsvorrichtung in Form einer axialen Vertiefung vor.

Aus DE 20 2004 020 174 U1 ist ein zylindrisches Hohlfilterelement eines Luftfilters bekannt, das an seiner geschlossenen Endscheibe ein unter einem spitzen Winkel zur Längsmittelachse abragendes Positionierungselement aufweist, das sich mit einer Radialkomponente über die geschlossene Endscheibe erstreckt.

### Offenbarung der Erfindung

Der Erfindung liegt die Aufgabe zugrunde, mit einfachen konstruktiven Maßnahmen ein Hohlfilterelement in der Weise auszubilden, dass eine sichere Montage und Aufnahme in einem Filtergehäuse gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Hohlfilterelement wird vorzugsweise zur Gasfiltration eingesetzt, beispielsweise als Luftfilter zur Filtration der einer Brennkraftmaschine zuzuführenden Verbrennungsluft, beispielsweise in Lastkraftwagen. Das Hohlfilterelement umfasst einen Filtermediumkörper, der als Hohlkörper ausgebildet ist und an dem die Filtration des zu reinigenden Fluids stattfindet. An zumindest einer axialen Stirnseite ist der Filtermediumkörper von einer Endscheibe abgedeckt, die vorzugsweise den innenliegenden Strömungsraum im Filtermediumkörper strömungsdicht verschließt. Auch an der gegenüberliegenden axialen Stirnseite kann eine Endscheibe angeordnet sein, die sich zumindest über den Bereich des Filtermediumkörpers erstreckt, wobei ggf. eine Strömungsöffnung der Endscheibe frei liegt, so dass Fluid zwischen dem innenliegenden Strömungsraum und der Umgebung ausgetauscht werden kann. Die Durchströmung des Filtermediumkörpers erfolgt vorzugsweise in Radialrichtung, insbesondere radial von außen nach innen, so dass der innenliegende Strömungsraum die Reinseite bildet, aus der das gereinigte Fluid axial abgeleitet wird. Der Filtermediumkörper kann prinzipiell eine beliebige Querschnittsform aufweisen, beispielsweise kreisförmig, oval oder stadionförmig.

An einer Endscheibe befindet sich ein Positionierungselement, das beim Schließen des Gehäusedeckels und im eingebauten Zustand des Filterelements mit einem gehäuseseitigen Schwert zusammenwirkt, das das Filterelement an dem Positionierungselement abstützt. Mit dem Einsetzen des Filterelements in das Filtergehäuse oder mit dem Aufsetzen und Schließen des Gehäusedeckels gelangt das gehäuseseitige Schwert in Kontakt mit dem Positionierungselement, hebt ggf. das Filterelement an zum Erreichen seiner endgültigen Einbaulage und stützt das Filterelement ab. In das Positionierungselement ist erfindungsgemäß eine Positionierausnehmung eingebracht.

Um einen lagerichtigen Sitz des Filterelements im Filtergehäuse zu gewährleisten, ist das Positionierungselement an der Endscheibe des Hohlfilterelements in der Weise ausgebildet, dass eine formschlüssige Aufnahme des Schwerts im oder am Positionierungselement in zwei verschiedene Quer- bzw. Radialrichtungen - bezogen auf die Längsachse des Filterelements - gewährleistet ist. Demzufolge besteht zwischen dem gehäuseseitigen Schwert und dem Positionierungselement an dem Hohlfilterelement eine formschlüssige Verbindung in beide Querrichtungen, die die Ebene der Endscheibe aufspannen und beide radial zur Längsachse des Hohlfilterelements verlaufen. Nimmt das Hohlfilterelement in Einbaulage beispielsweise eine liegende Position ein, in der die Längsachse des Hohlfilterelements orthogonal zum Gewichtskraftvektor verläuft, so kann über die Verbindung zwischen dem filterelementseitigen Positionierungselement und dem gehäuseseitigen Schwert eine lagerichtige Halterung des Hohlfilterelements in Vertikalrichtung sowie in Querrichtung erreicht werden.

Das Positionierungselement ist vorteilhafterweise einteilig mit der Endscheibe ausgebildet. Diese besteht beispielsweise aus Polyurethan, so dass auch das Positionierungselement aus diesem Material gefertigt ist. Es kommen aber auch andere Materialien für die Endscheibe und das Positionierungselement in Betracht, beispielsweise Kunststoff oder Metall. Des Weiteren ist es möglich, dass die Endscheibe und das Positionierungselement aus unterschiedlichen Materialien gefertigt sind, jedoch das Positionierungselement fest an der Endscheibe angeordnet ist.

Das Positionierungselement ragt radial über die Endscheibe hinaus. Das Positionierungselement kann zusätzlich oder alternativ auch in Axialrichtung über den Randbereich der Endscheibe hinausragen. Bei axial und/oder radial hinausragender Anordnung des Positionierungselements an der Endscheibe kann das Positionierungselement in vereinfachter Weise von dem gehäuseseitigen Schwert erfasst und das Hohlfilterelement in gewünschter Weise fixiert werden.

In die Positionierausnehmung ragt in montierter Lage das gehäuseseitige Schwert ein. Hierdurch ist die formschlüssige Aufnahme des Schwerts im Positionierungselement in zwei verschiedene Querrichtungen sicher gewährleistet. Die Positionierausnehmung ist entweder umseitig geschlossen ausgebildet oder randseitig offen und z.B. U-förmig ausgeführt. Die randseitig offene Ausführung hat den Vorteil, dass das Schwert in Radialrichtung in die Positionierausnehmung eingeführt werden kann. Bei der umseitig geschlossenen Positionierausnehmung wird das Schwert in Achsrichtung in die Positionierausnehmung eingeführt.

Gemäß noch einer weiteren zweckmäßigen Ausführung weist das Hohlfilterelement eine ovale oder annähernd ovale Querschnittsform auf. Es kann z.B. zweckmäßig sein, die Querschnittsform des Hohlfilterelements als langgestrecktes Oval auszubilden, das verhältnismäßig lang ausgeführte Längsseiten und kurz ausgeführte Schmalseiten besitzt. Bei ovaler oder annähernd ovaler Querschnittsform sitzt das Positionierungselement vorteilhafterweise an einer Längsseite. So ist es insbesondere zweckmäßig, bei liegender Einbausituation des Hohlfilterelements im aufnehmenden Filtergehäuse das Positionierungselement an der untenliegenden Längsseite, insbesondere mittig, am Hohlfilterelement anzuordnen. Eine Anordnung an einer Schmalseite ist insbesondere bei einer stehenden Einbausituation vorteilhaft.

Soweit das Positionierungselement mit einer Positionierausnehmung versehen ist, ragt diese vorzugsweise über den Randbereich des Hohlfilterelements hinaus, so dass das gehäuseseitige Schwert in die Positionierausnehmung ungehindert einfahren kann.

Das Hohlfilterelement ist in Achsrichtung konusförmig ausgebildet. Dementsprechend weist das Hohlfilterelement an seinen beiden axial gegenüberliegenden Stirnseiten eine unterschiedlich große Querschnittsfläche auf. Das Hohlfilterelement verjüngt sich zu der axialen Stirnseite hin, an der das Positionierungselement angeordnet ist. Der Konuswinkel liegt beispielsweise in einem Winkelbereich bis maximal 10° oder bis maximal 5°. In einer alternativen Ausführung ist das Hohlfilterelement zylindrisch ausgebildet.

Es kann des Weiteren zweckmäßig sein, an der Endscheibe, an der sich das Positionierungselement befindet, ein oder mehrere zusätzliche Justierelemente anzuordnen. So ist es beispielsweise vorteilhaft, mittig an der geschlossenen Endscheibe mit umseitigem Abstand zum Randbereich ein zentrales Justierelement anzuordnen, mit dem in Einbaulage ein gehäuseseitiges Gegenjustierelement zusammenwirkt. Zusätzlich oder alternativ können am Randbereich der Endscheibe überstehende Justierelemente in Form eines oder mehrerer Nocken angeordnet sein, die sich in Einbaulage an der Gehäuseinnenwand des aufnehmenden Filtergehäuses abstützen.

Das Schwert, welches mit dem Positionierungselement formschlüssig zusammenwirkt, befindet sich vorteilhafterweise am Gehäusedeckel, der auf ein topfförmiges Bauteil des Filtergehäuses aufsetzbar ist. Das Schwert kann ggf. mit einer Anlaufschräge versehen sein, die das Einfädeln in die Positionierausnehmung des Positionierungselements und das Anheben des Hohlfilterelements erleichtert.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines oval ausgebildeten Hohlfilterelements, mit einem Positionierungselement im Randbereich einer stirnseitigen Endscheibe, wobei das Positionierungselement mit einer umseitig geschlossenen Positionierausnehmung versehen ist,
- Fig. 2: eine Draufsicht auf die axiale Stirnseite des Hohlfilterelements,
- Fig. 3: ein Hohlfilterelement in einer weiteren Ausführung, bei der das randseitige Positionierungselement eine offene Positionierausnehmung aufweist,
- Fig. 4: in perspektivischer Ansicht ein Gehäusedeckel mit an der Deckelinnenseite angeordnetem Schwert, das in Einbaulage in die Positionierausnehmung des Positionierungselements einragt,
- Fig. 5: das Schwert in vergrößerter Darstellung,
- Fig. 6: eine Filtereinrichtung mit einem Filtergehäuse und dem eingesetzten Hohlfilterelement aus Fig. 1 bzw. 2,
- Fig. 7: eine vergrößerte Ansicht der Stirnseite des Hohlfilterelements mit angenähertem Gehäusedeckel,
- Fig. 8: einen Schnitt längs durch die Filtereinrichtung mit aufgesetztem Gehäusedeckel, wobei das Schwert an der Deckelinnenseite in die Positionierausnehmung des Positionierungselements hineinragt.

In den Figuren sind gleiche Bauteile mit gleichen Bezugszeichen versehen.

### Ausführungsformen der Erfindung

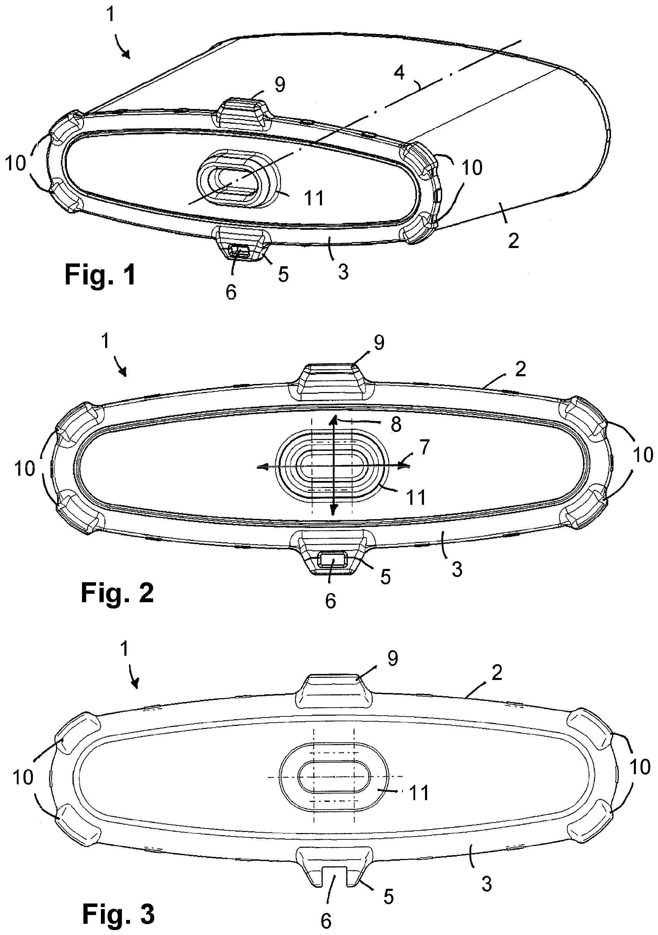

In Figuren 1 und 2 ist ein erstes Ausführungsbeispiel eines Hohlfilterelements 1 dargestellt, das zur Gasfiltration, insbesondere zur Luftfiltration in Brennkraftmaschinen, vorzugsweise für Lastkraftwagen, eingesetzt wird. Das Hohlfilterelement 1 weist einen als Hohlkörper ausgebildeten Filtermediumkörper 2 auf, der einen innenliegenden Strömungsraum umschließt. Das Filterelement weist eine stark ovalisierte Querschnittsform auf, wobei die Längsseiten im Vergleich zu einem tatsächlichen Oval eine geringere Krümmung und die Schmalseiten eine stärkere Krümmung aufweisen. Das Hohlfilterelement 1, dessen Längsachse zwischen den axialen Stirnseiten mit 4 bezeichnet ist, wird radial von außen nach innen von der zu reinigenden Luft durchströmt, so dass der innenliegende Strömungsraum die Reinseite bildet. Die gereinigte Luft wird anschließend über eine axiale Stirnseite des Hohlfilterelements eingeleitet.

Die weitere axiale Stirnseite des Hohlfilterelements 1 ist von einer durchgehenden Endscheibe 3 verschlossen, die sich sowohl im Bereich der Stirnseite des Filtermediumkörpers 2 als auch des umschlossenen, innenliegenden Strömungsraums erstreckt. Die Ebene der Endscheibe 3 liegt orthogonal zur Längsachse 4. Die Endscheibe 3 ist beispielsweise aus Polyurethan (PUR) gefertigt und kann an das Hohlfilterelement 1 angespritzt bzw. angegossen sein.

Das Hohlfilterelement 1 weist in Achsrichtung - bezogen auf die Längsachse 4 - Konusform auf. An der Endscheibe 3, die geschlossen ausgebildet ist und den innenliegenden Strömungsraum verschließt, besitzt das Hohlfilterelement 1 eine kleinere Querschnittsfläche als an der gegenüberliegenden axialen Stirnseite.

An der Endscheibe 3 ist ein Positionierungselement 5 angeformt, das sich im Randbereich der Endscheibe 3 an einer Längsseite befindet und radial und axial über die Außenkontur des Hohlfilterelements hinausragt. Das Positionierungselement 5 ist einstückig mit der Endscheibe 3 ausgebildet. In das Positionierungselement 5 ist eine Positionierausnehmung 6 eingebracht, die umseitig geschlossen ist. Die Positionierausnehmung 6 befindet sich radial außerhalb der Außenkontur des Hohlfilterelements 1 und dient zur Aufnahme eines gehäuseseitigen Schwerts zur Fixierung in beide Radial- bzw. Querrichtungen 7 und 8 gegenüber der Längsachse 4. Mit dem Eingreifen des gehäuseseitigen Schwerts in die Positionierausnehmung 6 wird eine formschlüssige Verbindung zwischen Schwert und Positionierungselement 5 in die beiden Querrichtungen 7 und 8 erreicht. Ein eventuell vorhandenes Spiel, mit dem das Hohlfilterelement 1 in das Filtergehäuse eingesetzt ist, kann hierdurch eliminiert und das Hohlfilterelement im Filtergehäuse fixiert werden. Das gehäuseseitige Schwert wird axial in die umseitig geschossene Positionierausnehmung 6 eingeführt.

Im Bereich des Außenumfangs sind an der Endscheibe drei weitere Positionier- bzw. Justierelemente 9, 10 angeformt, die axial und radial über die Kontur des Hohlfilterelements 1 hinausragen. Ein erstes Justierelement 9 in Form eines Nockens befindet sich an der dem Positionierungselement 5 gegenüberliegenden Längsseite und ist ebenso wie das Positionierungselement 5 in der Mitte der Längsseite angeordnet. Jeweils zwei Justierelemente 10 befinden sich an jeder Schmalseite. Die Justierelemente 9 und 10 stützen das Hohlfilterelement 1 in Einbaulage an der Innenwand des aufnehmen Filtergehäuses bzw. des Gehäusedeckels ab.

Ein weiteres Justierelement 11 befindet sich mittig an der Stirnseite und ist ebenso wie die weiteren Justierelemente einteilig mit der Endscheibe 3 ausgebildet. Das zentrische Justierelement 11 weist eine Vertiefung auf, in die ein entsprechendes Gegenjustierelement am Gehäusedeckel in Einbaulage eingreift.

In Fig. 3 ist ein weiteres Ausführungsbeispiel eines Hohlfilterelements 1 dargestellt, das grundsätzlich den gleichen Aufbau wie das Hohlfilterelement aus Figuren 1 bzw. 2 aufweist. Unterschiedlich ist aber bei Fig. 3 die Ausführung des Positionierungselements 5, das eine randseitig offene Positionierausnehmung 6 aufweist, die einen U-förmigen Querschnitt besitzt und radial nach außen offen ausgebildet ist. Dies ermöglicht es, dass das gehäuseseitige Schwert in Radialrichtung in die Ausnehmung 6 hineingeführt wird. Die Fixierung erfolgt wie beim ersten Ausführungsbeispiel in beide Quer- bzw. Radialrichtungen.

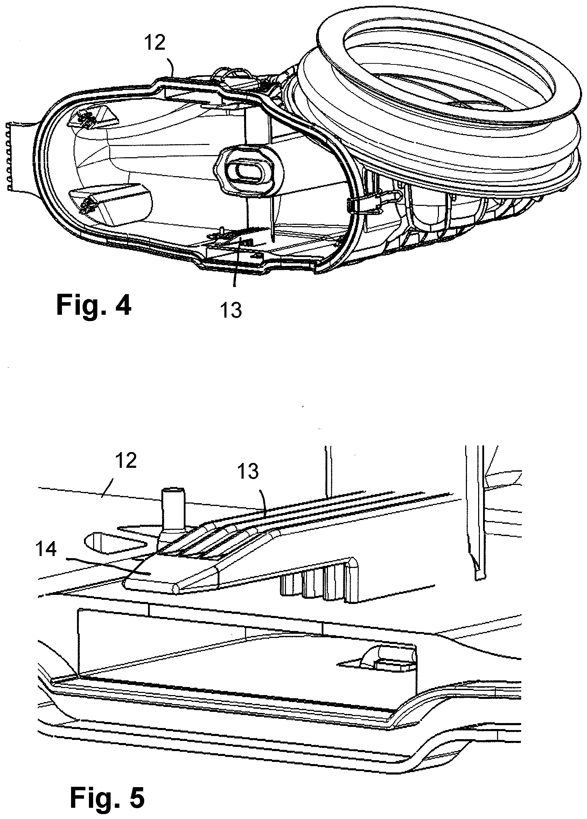

In Figuren 4 und 5 ist ein Gehäusedeckel 12 dargestellt, der auf ein Filtergehäuse zur Aufnahme des Hohlfiltergehäuses aufgesetzt werden kann. An der Innenwand des Gehäusedeckels 12 befindet sich ein Schwert 13, das sich axial zur offenen Seite des Gehäusedeckels hin erstreckt, jedoch vollständig innerhalb des Gehäusedeckels 12 angeordnet ist. Der vergrößerten Darstellung gemäß Fig. 5 ist zu entnehmen, dass die Spitze des Schwertes 13 mit einer an der Oberseite abgeflachten Anlaufschräge 14 versehen ist, welche das Einführen in die Positionierausnehmung 6 am Positionierungselement 5 erleichtert. Außerdem wird mit dem Einführen in die Positionierausnehmung 6 zugleich ein Anheben des Hohlfilterelements 1 innerhalb des aufnehmenden Filtergehäuses erreicht, wodurch das gegenüberliegende nockenförmige Justierelement 9 gegen die Gehäuseinnenwand gedrückt wird.

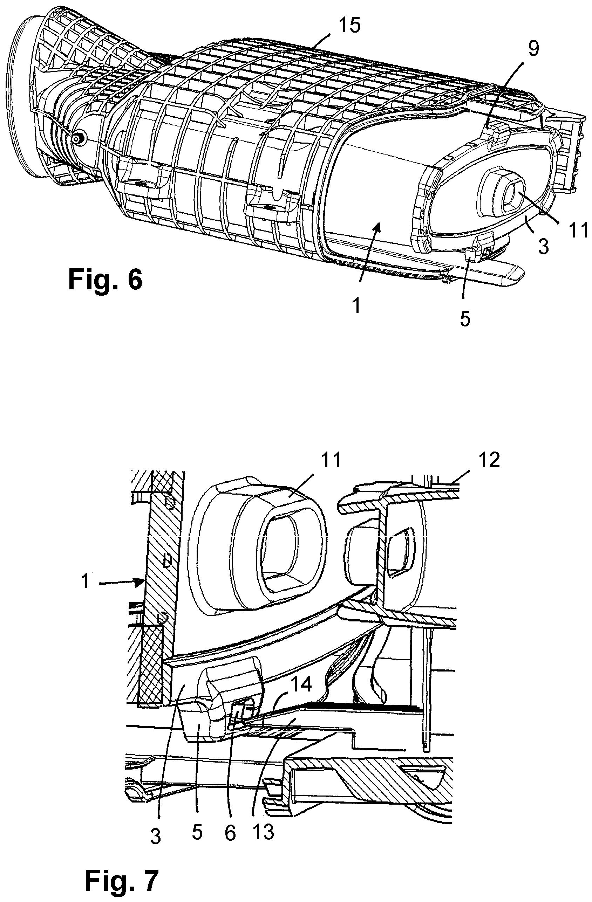

In Fig. 6 ist das Hohlfilterelement 1 im aufnehmenden Filtergehäuse 15 dargestellt. Auf das Filtergehäuse 15 wird der Gehäusedeckel 12 aufgesetzt. Mit dem Annähern des Gehäusedeckels 12 an das Hohlfilterelement 1 (Fig. 7) gelangt die Spitze des im Gehäusedeckel 12 angeordneten Schwerts 13 in Eingriff mit der Positionierausnehmung 6 im Positionierungselement 5 und kann sich bis zur Unterseite des Hohlfilterelements 1 erstrecken. Die Anlaufschräge 14 an der Oberseite der Spitze des Schwerts 13 hebt hierbei das gesamte Hohlfilterelement 1 nach oben an.

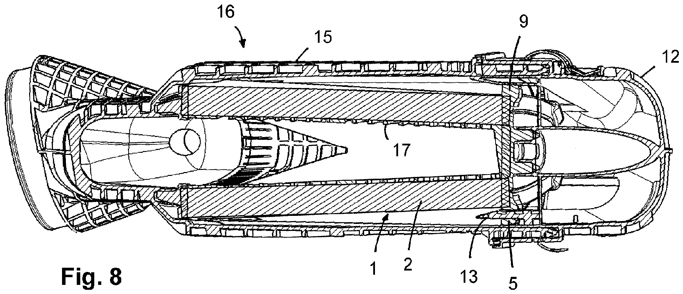

In Fig. 8 ist die Filtereinrichtung 16 im Schnitt dargestellt. Die Filtereinrichtung 16 umfasst das Filtergehäuse 15 mit aufgesetztem Gehäusedeckel 12 und das in das Filtergehäuse 15 eingesetzte Hohlfilterelement 1. Zu erkennen ist außerdem, dass der Filtermediumkörper 2 an seiner Innenseite von einem Stützgerüst 17 ausgekleidet ist, das zugleich die begrenzende Wand des innenliegenden Strömungsraums bildet. Die Ableitung des gereinigten Fluids aus dem innenliegenden Strömungsraum erfolgt axial über die dem Gehäusedeckel 12 gegenüberliegende Seite, an der das Hohlfilterelement 1 mit einer Endscheibe versehen ist, die jedoch nur den Filtermediumkörper 2 abdeckt und im Bereich des innenliegenden Strömungsraums offen ausgebildet ist.

Das Schwert 13 ragt in die Positionierausnehmung des Positionierungselements 5 ein und hebt das Hohlfilterelement 1 so weit an, dass das obenliegende nockenförmige Justierelement 9 gegen die Innenwand des Filtergehäuses gepresst wird.

## Patentansprüche

1. Hohlfilterelement eines Luftfilters, zum Einsetzen in ein öffenbares Filtergehäuse, mit einem als Hohlkörper ausgebildeten Filtermediumkörper (2), der einen innenliegenden Strömungsraum umschließt, mit mindestens einer geschlossenen Endscheibe (3), die den Filtermediumkörper (2) an einer axialen Stirnseite abdeckt, wobei an der Endscheibe (3) ein mit einem gehäuseseitigen Schwert (13) zusammenwirkendes Positionierungselement (5) angeordnet ist, wobei das Positionierungselement (5) zur formschlüssigen Aufnahme des Schwerts (13) in zwei verschiedene Querrichtungen (7, 8) ausgebildet ist und in das Positionierungselement (5) eine Positionierausnehmung (6) eingebracht ist, **dadurch gekennzeichnet, dass** das Positionierungselement (5) radial über die geschlossene Endscheibe (3) hinausragt und das Hohlfilterelement (1) in Achsrichtung konusförmig ausgebildet ist, wobei sich das Hohlfilterelement zu der axialen Stirnseite hin, an der das Positionierungselement vorliegt, verjüngt.

2. Hohlfilterelement nach Anspruch 1, **dadurch gekennzeichnet, dass** das Positionierungselement (5) axial über den Randbereich der Endscheibe (3) hinausragt.

3. Hohlfilterelement nach Anspruch 1 oder 2, **dadurch gekennzeichnet, dass** die Positionierausnehmung (6) eine umseitig geschlossene Positionierausnehmung (6) ist.

4. Hohlfilterelement nach einem der Ansprüche 1 bis 3, **dadurch gekennzeichnet, dass** die Positionierausnehmung (6) eine randseitig offene Positionierausnehmung (6) ist.

5. Hohlfilterelement nach einem der Ansprüche 1 bis 4, **dadurch gekennzeichnet, dass** das Positionierungselement (5) einteilig mit der Endscheibe (3) ausgebildet ist.

6. Hohlfilterelement nach einem der Ansprüche 1 bis 5, **dadurch gekennzeichnet, dass** die Querschnittsform des Hohlfilterelements (1) zumindest näherungsweise als ein Oval ausgebildet ist.

7. Hohlfilterelement nach Anspruch 6, **dadurch gekennzeichnet, dass** das Positionierungselement (5) an der Längsseite des Ovals angeordnet ist.

8. Filtereinrichtung mit einem Hohlfilterelement nach einem der Ansprüche 1 bis 7 und mit einem Filtergehäuse (15) zur Aufnahme des Hohlfilterelements (1), wobei an einem Gehäusebauteil ein Schwert (13) angeordnet ist, das in das Positionierungselement (5) an der Endscheibe (3) formschlüssig einragt.

9. Filtereinrichtung nach Anspruch 8, **dadurch gekennzeichnet, dass** das Schwert (13) eine Anlaufschräge (14) zum Einfädeln in das Positionierungselement (5) und Anheben des Hohlfilterelements (1) aufweist.

10. Filtereinrichtung nach Anspruch 8 oder 9, **dadurch gekennzeichnet, dass** das Schwert (13) am Gehäusedeckel (12) angeordnet ist.

## Claims

1. Hollow filter element of an air filter, for insertion into an openable filter housing, with a filter medium body (2) designed as hollow body, which filter medium body encloses an inside-lying flow chamber, with at least one closed end disc (3) which covers the filter medium body (2) on an axial front face, wherein a positioning element (5) interacting with a housing-sided blade (13) is disposed at the end disc (3), wherein the positioning element (5) is designed in two different transversal directions (7, 8) for a positive reception of the blade (13) and a positioning recess (6) is realized in the positioning element (5), **characterized in that** the positioning element (5) protrudes radially beyond the closed end disc (3) and that the hollow filter element (1) is conical shaped in axial direction, wherein the hollow filter element tapers towards the axial front face on which the positioning element is located.

2. Hollow filter element according to claim 1, **characterized in that** the positioning element (5) protrudes axially beyond the peripheral area of the end disc (3).

3. Hollow filter element according to claim 1 or 2, **characterized in that** the positioning recess (6) is a positioning recess (6) closed at its periphery.

4. Hollow filter element according to one of the claims 1 to 3, **characterized in that** the positioning recess (6) is a positioning recess (6) open at its edge.

5. Hollow filter element according to one of the claims 1 to 4, **characterized in that** the positioning element (5) is designed as one piece with the end disk (3).

6. Hollow filter element according to one of the claims 1 to 5, **characterized in that** the cross-sectional shape of the hollow filter element (1) is at least approximately designed as an oval.

7. Hollow filter element according to claim 6, **characterized in that** the positioning element (5) is disposed on the longitudinal side of the oval.

8. Filtering device with a hollow filter element according to one of the claims 1 to 7 and with a filter housing (15) for receiving the hollow filter element (1), wherein a blade (13), which projects in a positive manner into the positioning element (5) at the end disc (3), is disposed on a housing component.

9. Filtering device according to claim 8, **characterized in that** the blade (13) features a sloped ramp (14) for inserting the positioning element (5) and raising the hollow filter element (1).

10. Filtering device according to claim 8 or 9, **characterized in that** the blade (13) is disposed at the housing cover (12).

## Revendications

1. Élément de filtre creux d'un filtre à air, pour introduction dans un boîtier de filtre ouvrable, avec un corps de milieu filtrant (2) conçu en tant que corps creux, lequel corps de milieu filtrant entoure un espace d'écoulement disposé à l'intérieur, avec au moins un disque d'extrémité (3) fermé qui couvre le corps de milieu filtrant (2) sur une face frontale axiale, dans lequel un élément de positionnement (5) interagissant avec une lame (13) côté boîtier est disposé sur le disque d'extrémité (3), dans lequel l'élément de positionnement (5) est conçu en deux différentes directions transversales (7, 8) pour une réception par engagement positif de la lame (13) et un évidement de positionnement (6) est réalisé dans l'élément de positionnement (5), **caractérisé en ce que** l'élément de positionnement (5) fait saillie radialement au-delà du disque d'extrémité (3) fermé et que l'élément de filtre creux (1) est réalisé en forme de cône dans la direction axiale, dans lequel l'élément de filtre creux se rétréci vers la face frontale axiale, sur laquelle se trouve l'élément de positionnement.

2. Élément de filtre creux selon la revendication 1, **caractérisé en ce que** l'élément de positionnement (5) fait saillie axialement au-delà de la zone périphérique du disque d'extrémité (3).

3. Élément de filtre creux selon la revendication 1 ou 2, **caractérisé en ce que** l'évidement de positionnement (6) est un évidement de positionnement (6) fermé sur son pourtour.

4. Élément de filtre creux selon l'une des revendications 1 à 3, **caractérisé en ce que** l'évidement de positionnement (6) est un évidement de positionnement (6) ouvert sur son bord.

5. Élément de filtre creux selon l'une des revendications 1 à 4, **caractérisé en ce que** l'éléments de positionnement (5) est exécutée en un bloc avec le disque d'extrémité (3).

6. Élément de filtre creux selon l'une des revendications 1 à 5, **caractérisé en ce que** la forme de la section transversale de l'élément de filtre creux (1) est conçue au moins approximativement sous la forme d'un ovale.

7. Élément de filtre creux selon la revendication 6, **caractérisé en ce que** l'élément de positionnement (5) est disposé sur le côté longitudinal de l'ovale.

8. Dispositif de filtration avec un élément de filtre creux selon l'une des revendications 1 à 7 et avec un boîtier de filtre (15) pour recevoir l'élément de filtre creux (1), dans lequel une lame (13) qui fait saillie par engagement positif dans l'élément de positionnement (5) sur le disque d'extrémité (3) est disposée sur un composant de boîtier.

9. Dispositif de filtration selon la revendication 8, **caractérisé en ce que** la lame (13) présente un biais de montée (14) pour enfiler l'élément de positionnement (5) et soulever l'élément de filtre creux (19.

10. Dispositif de filtration selon la revendication 8 ou 9, **caractérisé en ce que** la lame (13) est disposé sur le couvercle de boîtier (12).
